# EUROPEAN PATENT SPECIFICATION

(11) **EP 3 692 274 B1**
(45) Date of publication and mention of the grant of the patent: **06.04.2022**
(21) Application number: 18782145.9
(22) Date of filing: 27.09.2018
(51) Int. Cl.: F16D 55/41, B62D 15/00, B60B 27/00, B60B 35/02, F16D 65/22, F16D 65/28, F16D 65/00

(54) **A STEERING AXLE BRAKE ASSEMBLY**
LENKACHSE MIT BREMSE
ESSIEU DIRECTEUR AVEC FREIN

(30) Priority: 05.10.2017 GB 201716309
(43) Date of publication of application: 12.08.2020
(73) Proprietor: FPW Axles Ltd, Accrington, Lancashire BB5 6NN (GB)
(72) Inventor: TAYLOR, Scott, Accrington Lancashire BB5 6NN (GB)
(74) Representative: HGF
(86) International application number: PCT/GB2018/052747
(87) International publication number: WO 2019/069052

(56) References cited:
- DE-A1- 2 502 628
- DE-A1-102017 203 934
- DE-U1- 20 111 567
- GB-A- 1 255 450

## Description

### TECHNICAL FIELD

The present invention relates to vehicle steering axle assemblies and more particularly, but not exclusively, to steering axle assemblies for use in dependent suspensions.

### BACKGROUND

DE102017203934A1 discloses a full disc brake. GB2365087A discloses a wedge operated ball brake actuated by a lever and camshaft.

### SUMMARY OF THE DISCLOSURE

According to a first aspect, there is provided a steering axle assembly comprising:
a housing having a wheel bearing;
a wheel axle that is rotatably supported in the wheel bearing for rotation about a wheel rotation axis;
a pivot assembly for pivoting the housing about a housing pivot axis that is transverse to the wheel rotation axis, the pivot assembly comprising first and second swivel pins for pivotally mounting within first and second pivot bearings;
a brake mechanism having an assembly of members mounted on and around the wheel axle and further having an actuator for causing mutual engagement between the members to brake rotation of the wheel axle about the wheel rotation axis,
wherein the actuator comprises a moveable actuation element moveably mounted within or through the first swivel pin.

A control pathway for operating the actuator may extend through a wall of the swivel pin.

The assembly of members mounted on and around the wheel axle may comprise a ball-and-ramp plate assembly, and a friction plate and a braking plate,
the actuator may have a moveable actuation with a tapered portion that is configured to operatively engage with ball-and-ramp plate assembly to compress the arrangement of friction plates and braking plates between the ball-and-ramp plate assembly and a respective wall of the housing.

The actuator may be a hydraulically operated actuator having a piston chamber within the first swivel pin,
the moveable actuation element may be connected to a piston slideably received in the piston chamber, and
the control pathway may be a hydraulic fluid pathway for the supply of hydraulic fluid to operate the actuator.

The actuator may be an electrically operated actuator having an electric motor within the first swivel pin,
the moveable actuation element may be connected to a piston slideably received in the piston chamber, and
the control pathway may be an electrical signal pathway for suppling an electrical drive signal to the electric motor to operate the actuator.

The control pathway may be a mechanical linkage by which the moveable actuation element is connected to a mechanical drive mechanism.

The exterior of the first swivel pin may be provided with a hydraulically sealed region for providing fluid communication between an outer conduit for the supply of hydraulic fluid from a vehicle hydraulic fluid control system and an inner conduit that provides fluid communication through a wall of the first swivel pin and into the piston chamber.

The hydraulically sealed region may be provided around the exterior of the first swivel pin between first and second annular seals.

The moveable actuation element may be connected to a worm screw engaged in a complementary thread provided within the first swivel pin, and the electric motor may be adapted to drive rotation of the worm screw or complementary thread.

The mechanical drive mechanism may be a user-operable handle.

The first swivel pin may be provided with an axially aligned central conduit through which the mechanical linkage extends.

An end of the first swivel pin may be received within a suspension coil spring seat.

The assembly of members mounted on and around the wheel axle may be hydraulically sealed within the housing, within cooling liquid.

The assembly of members mounted on and around the wheel axle may be provided within a brake mechanism chamber, and
an additional reservoir for cooling liquid may be provided that is in fluid communication with the brake mechanism chamber.

According to a second aspect, there is provided a suspension assembly comprising:
an axle beam; and
first and second steering axle assemblies according to the first or second aspect,
wherein the axle beam comprises first and second pivot bearings pivotably supporting each of the steering axle assemblies.

According to a third aspect, there is provided a vehicle comprising a vehicle body mounted to the suspension assembly of the third aspect.

### DESCRIPTION OF THE DRAWINGS

Examples are further described hereinafter with reference to the accompanying drawings, in which:
- Figure 1A shows a cut-away view of a steering axle assembly;
- Figure 1B shows a perspective view of a suspension assembly having first and second of the steering axle assemblies shown in Figure 1A that are pivotally connected to an axle beam;
- Figures 1C, 1D and 1E show components from the brake mechanism of the steering axle assembly of Figure 1A, disassembled for the purposes of illustration;
- Figure 2 shows a schematic view of a further actuation mechanism;
- Figure 3 shows a cut-away view of a further steering axle assembly; and
- Figure 4 shows a cut-away schematic view of an exemplary steering axle assembly.

### DETAILED DESCRIPTION

In the described examples, like features have been identified with like numerals, albeit in some cases having one or more of: increments of 100; and typographical marks e.g. primes.

For example, 100, 100', 200, 300 and 400 have been used to indicate a steering axle assembly.

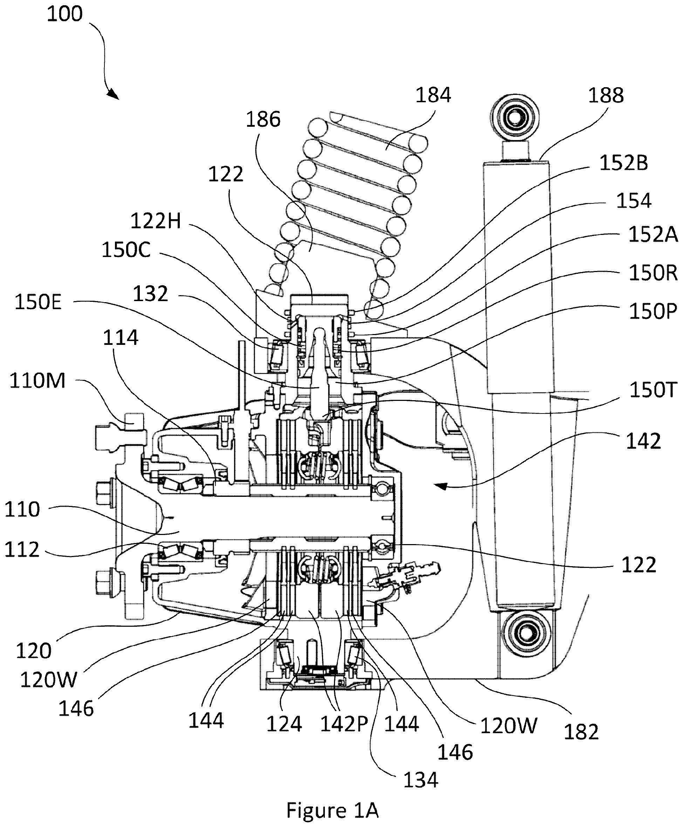

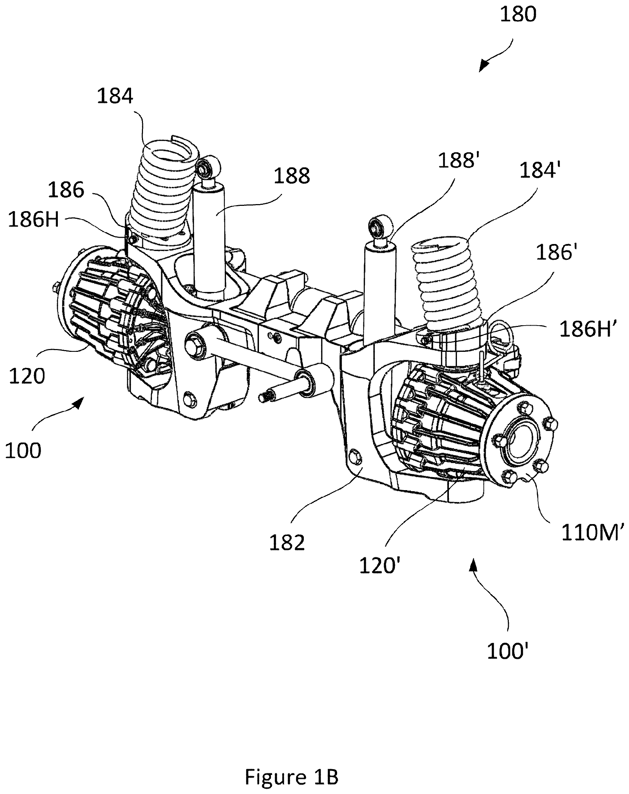

Figure 1A shows a cut-away view of a steering axle assembly 100, and Figure 1B shows a suspension assembly 180, for example for an airport ground support tow truck or a road sweeper. The suspension assembly 180 has first and second steering axle assemblies 100, 100' pivotally connected to an axle beam 182. The second steering axle assembly 100' is substantially a mirror image of the first steering axle assembly 100.

The steering axle assembly 100 has a wheel axle 110 rotatably supported in a housing 120, which is pivotably mounted to an axle beam 182.

The wheel axle 110 is rotatably held in the housing 120 by wheel bearings 112 and a retention nut 114, and is adapted for connection to a wheel assembly (not shown), e.g. a wheel hub and tyre, onto a mounting plate 110M. The retention nut 114 may additionally comprise an exciter ring, for use with a sensor to detect wheel rotation speed in an anti-lock braking system.

The housing 120 has an upper swivel pin 122 and a lower swivel pin 124, which are respectively pivotally held by the axle beam 182 by an upper pivot bearing 132 and a lower pivot bearing 134 (e.g. a pair of opposed taper bearings). The vehicle's body (not shown) is connected to the axle beam 182 by coil springs 184, which are each received onto a coil spring seat 186 connected to the axle beam, and by shock absorbers (dampers) 188.

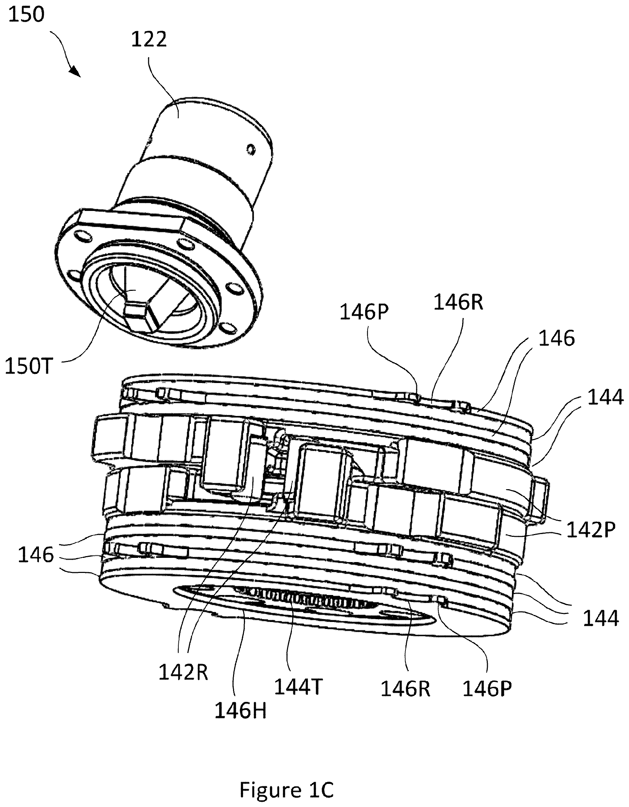

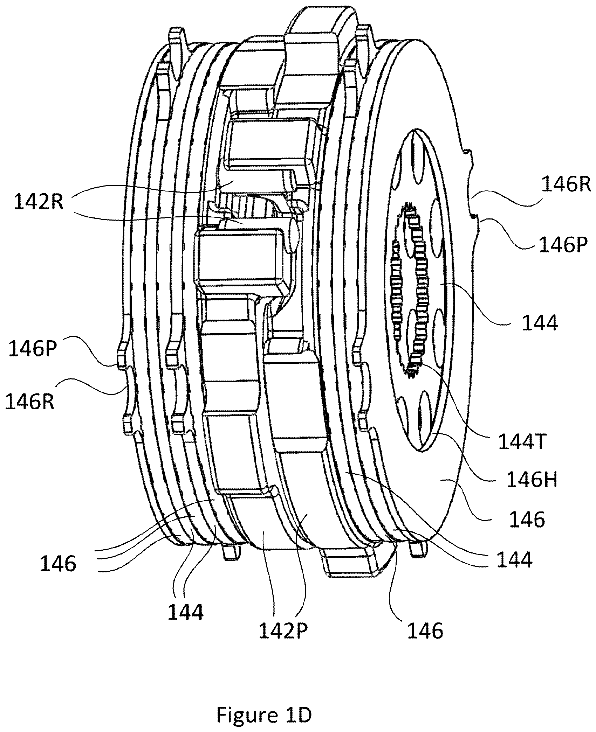

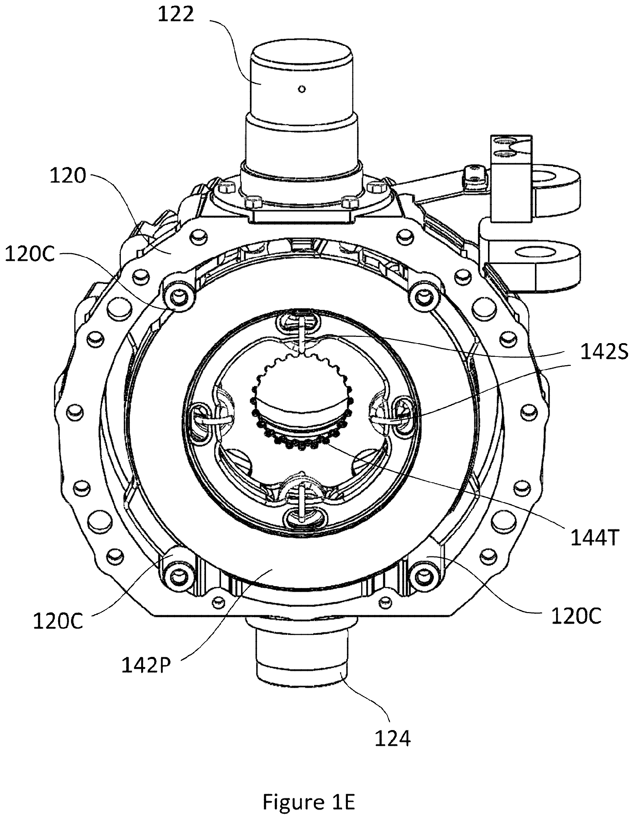

The wheel axles 110, 100' are each provided with a brake mechanism. In the illustrated steering axle assembly 100, each brake mechanism has elements mounted on and around the wheel axle 110, being a ball-and-ramp plate assembly 142, an arrangement of friction plates 144 and braking plates 146 for compression between the ball-and-ramp plate assembly and a respective wall 120W of the housing 120 (e.g. one or more friction plates and one or more braking plates on each side of the ball-and-ramp plate assembly 142, e.g. being in an interleaved arrangement where there is more than one of each), and is further provided with a brake actuator for operating the ball-and-ramp plate assembly 142, and Figures 1C, 1D and 1E show components of a brake mechanism, disassembled for the purposes of illustration.

The friction plates 144 are mounted on and mechanically engaged for rotation with the wheel axle 110. In the illustrated steering axle assembly 100, teeth 144T project inwardly from the central aperture of the friction plates 144 and engage with complementary splines on the exterior of the wheel axle 110, providing co-rotation with the wheel axle and allowing axial movement along the wheel axle. The wheel axle 110 is received through a clearance hole 146H in each braking plate 146.

Each braking plate 146 is adapted to mechanically engage with the housing 120 to prevent relative rotation of the braking plate in use. In the illustrated braking plate 146, external projections 146P with semi-circular rebates 146R engage with complementarily-shaped, anti-rotation pins (e.g. cylindrically shaped features) 120C on the interior of the housing 120, which prevent relative rotation and permit axial movement of the braking plate 146 along the wheel axle 110.

The ball-and-ramp plate assembly 142 comprises a pair of plates 142P, spaced apart by balls (not shown) engaged with ramps (not shown) on the facing surfaces of the plates, which are biased together by tension springs 142S. A pair of rollers 142R is provided that are rotatable about axes that are substantially aligned with the rotational axis of the wheel axle 110, with one roller rotatably mounted on each plate 142P. The rotational travel of each of the ball-and-ramp plates 142P is limited by engagement with the anti-rotation pins 120C.

The actuator has a moveable actuation element 150E with a tapered portion (e.g. a wedge) 150T that tapers-inwardly towards wheel axle 110, and which is connected to a hydraulically operated piston 150P that is slideable within hollow interior of the upper swivel pin 122. The tapered portion 150T is aligned for insertion between the axially orientated rollers 142R, to push them apart, when driven towards the wheel axle 110, in use. A return spring 150R biases the tapered portion 150T away from the rollers 142R and into the disengaged position.

The upper swivel pin 122, providing the housing of the brake actuator, is received into a cap, provided by the coil spring seat 186. A hydraulic seal 152A is provided between the swivel pin 122 and the cap (e.g. coil spring seat 186), forming a hydraulically sealed region 154 around the exterior of the swivel pin and within the cap. An outer hydraulic fluid channel (not shown) is provided through the cap (e.g. coil spring seat) 186 from the vehicle's hydraulic control system (not shown) into the hydraulically sealed region 154, and an inner hydraulic fluid channel 122H couples from the hydraulically sealed region 154 to the piston chamber 150C.

As shown, a further hydraulic seal 152B may be provided between the swivel pin 122 and its cap (e.g. coil spring seat 186), confining the hydraulically sealed region 154 to a band-shaped annular region around the swivel pin, which does not extend to the end of the swivel pin. Confining the hydraulic fluid to an annular band around the swivel pin 122 facilitates bleeding of the hydraulic system.

The housing 120 protectively seals the brake mechanism from the external environment, and is partially filled (or substantially filled) with cooling oil. The housing prevents the ingress of dirt into the brake mechanism, and the egress of brake dust into the external environment. The housing 120 is part-filled with oil that assists the dissipation of heat from braking surfaces, in use.

To apply braking to the wheel axle 110, brake fluid is supplied from the vehicle's hydraulic control system, through the outer hydraulic fluid channel, through hydraulically sealed region 154, and through the inner hydraulic fluid channel 156 into the piston chamber 150C. The supply of brake fluid into the piston chamber 150C drives the piston 150P down, wedging the tapered portion 150T of the brake actuator between the rollers 142R in the ball-and-ramp assembly (or forcing a wider part of the tapered portion between the rollers), which are driven apart. Driving the rollers 142R apart transversely to the wheel rotation axis causes relative rotation of the ball-and-ramp plates 142P about the wheel axle 110, in turn causing the ball-and-ramp plates to be driven apart from each other along the wheel rotation axis, by the rolling of the balls along their respective ramps. When driven apart along the wheel axle 110, the ball-and-ramp plates 142P act to compress the arrangement of friction plates 144 and braking plates 146 against respective interior walls 120W of the housing 120, causing frictional engagement between the rotating friction plates 144 and the braking plates 146, the ball-and-ramp plates 142P and the interior of the housing, acting to slow the rotation of the wheel axle.

In the illustrated steering axle assembly 100, hydraulic communication to the piston chamber 150C is provided through the hydraulically sealed region 154 provided in the gap between the upper swivel pin 122 and the interior of the hollow coil spring seat 186, into which it is received. However, in an alternative arrangement, hydraulic communication to the piston chamber may be through a hydraulically sealed region provided between a swivel pin and a separate cap, or may be through a hydraulically sealed region provided between a swivel pin and the axle beam. In a further alternative arrangement, hydraulic communication to the piston chamber may be through an end of the swivel pin, e.g. through a hydraulic hose connected directly to an exposed end of the swivel pin. In a yet further arrangement, the hydraulic communication to the piston chamber may be separate from the swivel pin, e.g. being routed through a conduit in the housing, to which a hydraulic hose is connected.

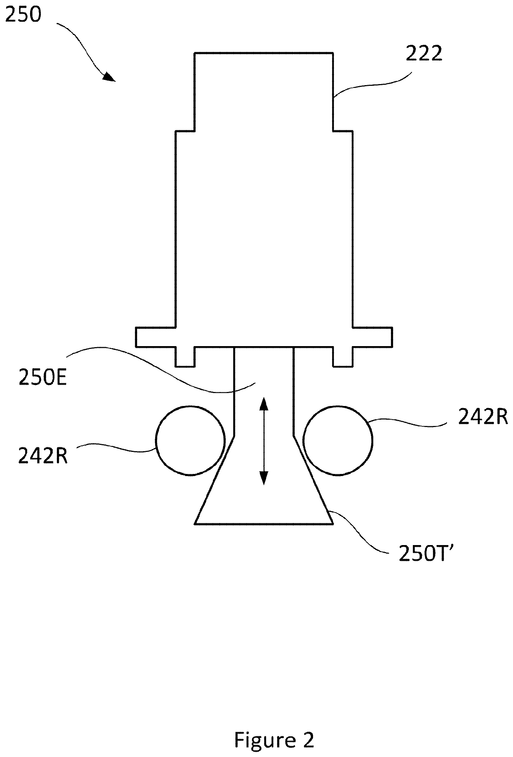

In the steering axle assembly 100 illustrated in Figure 1A, the brake actuator has a moveable actuation element 150E with a tapered portion 150T (a tapered element) that tapers inwardly towards wheel axle 110. Alternatively, as illustrated schematically in Figure 2, the moveable actuation element 250E may have a tapered portion 250T' that tapers inwardly away from the wheel axle (e.g. a trumpet-shaped element with an outwardly flared end), and which is connected to a hydraulically operated piston (not shown) that is slideable within hollow interior of the upper swivel pin 222. The tapered portion 250T' is aligned between the axially orientated rollers 242R, to push them apart, when driven away from the wheel axle, in use. A return spring (not shown) biases the tapered portion 250T' away from the rollers 242R and into the disengaged position.

In the steering axle assembly 100 illustrated in Figure 1A, the brake actuator for the brake mechanism is operated by a vehicle hydraulic control system. However, in alternative arrangements, the brake actuator within the swivel pin may be electrically driven by a vehicle electrical control system, or mechanically driven by a user-operated mechanical linkage.

In the case of an electrically driven brake actuator (not shown), the tapered portion may be wedged may be driven into the ball-and-ramp plate assembly by an electric motor assembly mounted within a swivel pin, and controlled by an electrical control signal from the vehicle's electrical control system. The electrical signal may be connected to the swivel pin by a flexible connection (e.g. a flexible electrical cable). Alternatively, the electrical signal may be transferred to the swivel pin by a slideable electrode arrangement in which a surface electrode is provided around the swivel pin (e.g. one or more ring-shaped electrodes around the exterior of the swivel pin) or on an end (e.g. an annular or circular electrode on the end of the swivel pin), and electrically contacted by a sprung electrode connected to the axle beam, e.g. within a swivel pin cap, e.g. within the coil spring seat in the arrangement illustrated. Alternatively, a surface electrode may be provided on the axle beam or a component fixed to the axle beam, and a sprung electrode may be electrically connected to the swivel pin for slideably contacting the surface electrode. An electrically driven brake actuator may alternatively be driven by an electric motor assembly connected to the axle beam, with the brake actuator projecting through a central aperture in the end of the swivel pin.

The tapered portion (e.g. wedge) may be provided with a worm screw, received within a complementary screw thread within the swivel pin (actuator housing), and the electric motor may cause the worm screw (or a complementary screw thread) to rotate, causing the tapered portion to be driven into the ball-and-ramp plate assembly. The tapered portion may be connected to the worm screw by a rotatable linkage. Alternatively, the tapered portion may be driven via a gearbox provided within or outside the respective swivel pin.

In the case of a brake actuator operated by a mechanical linkage (not shown), for example being operated by a hand-operated parking brake handle, connected to the actuator through a brake cable, to wedging the tapered portion into the ball-and-ramp plate assembly against a return spring. The mechanical linkage may be geared to provide a mechanical advantage. The mechanical linkage may be mounted on the axle beam and extend through a central aperture in the top of the upper swivel pin.

Alternatively, a user-operated lever may supply hydraulic fluid to a hydraulically-operated brake actuator to wedge the tapered portion into the ball-and-ramp plate assembly, with a hydraulic system corresponding with that shown in Figure 1A.

Providing the brake actuator within a swivel pin permits a particularly compact suspension assembly, enables suspension coil springs to be placed close to the wheels providing enhanced lateral vehicle stability, and enables the wheels to be placed close to the steering pivot axis to minimise cantilever forces, wear on the pivot assembly and bump-steer.

Providing the actuator control (e.g. supplying hydraulic fluid, an electrical control signal, or a mechanical linkage) through the swivel pin further permits a compact suspension assembly, and facilitates a large backlock angle of the corresponding wheel (the maximum angle by which the wheel may be pivoted away from the straight-ahead steering position).

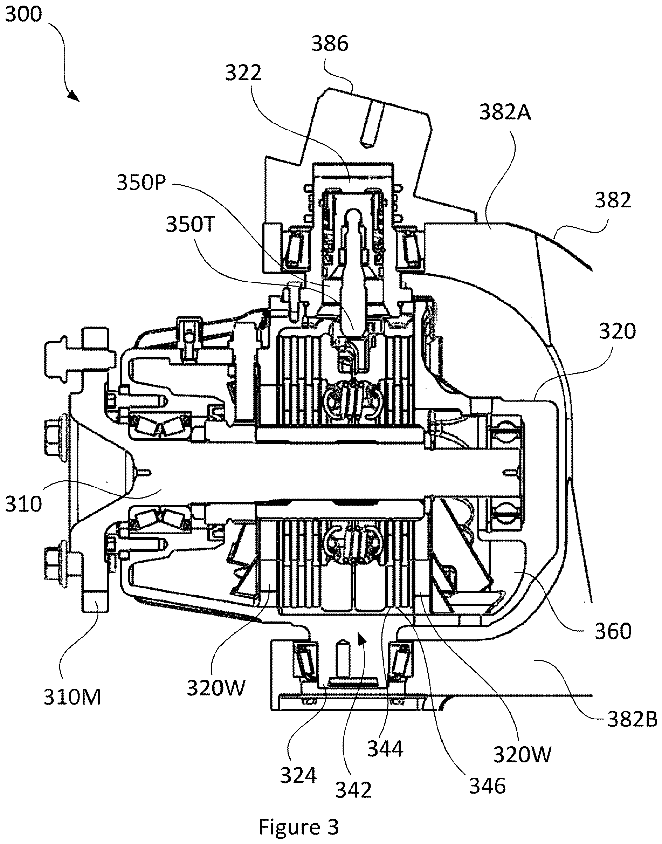

Figure 3 shows a further steering axle assembly 300, in which the housing 320 is additionally provided with a reservoir 360 for additional brake cooling oil. The ball-and-ramp plate assembly 342, friction plates 344 and braking plates 346 are provided in a brake mechanism chamber between walls 320W of the housing 320. Fluid communication between the brake mechanism chamber and the reservoir 360 is provided by one or more ports in a wall 320 of the brake mechanism chamber. In the illustrated further steering axle assembly 300, the reservoir 360 is located on the opposite side of the braking mechanism chamber from the wheel mounting plate 310M. When not turning, the reservoir 360 is within a portion of the housing 320 extending between the upper and lower arms 382A of the axle beam.

The provision of additional brake cooling oil in the reservoir 360 substantially increases the heat capacity of the cooling oil and increases the thermal dissipation of heat from the cooling oil, reducing the temperature rise of the cooling oil during extended braking.

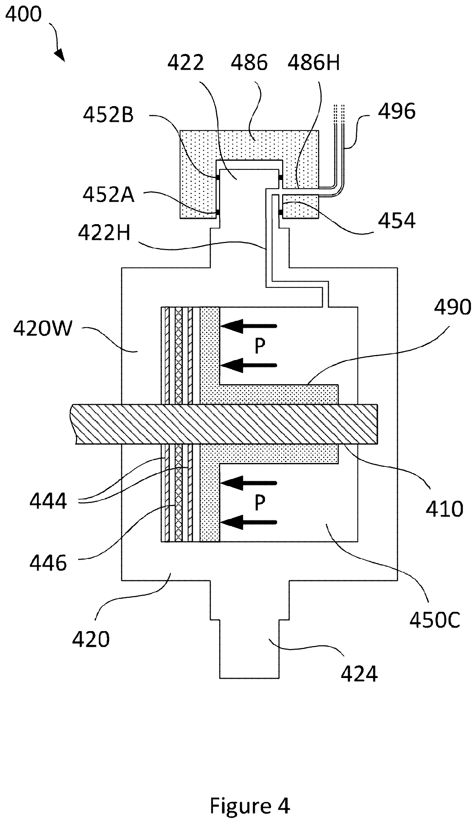

Figure 4 shows a schematic cut-away view of part of an exemplary steering axle assembly 400. The steering axle assembly 400 has a wheel axle 410 rotatably supported in a housing 420, which is pivotably mounted to an axle beam (not shown) at upper and lower swivel pins 422 and 424.

The brake mechanism has elements mounted on and around the wheel axle 410, being an annular braking plate 146 between annular friction plates 444 (e.g. one or more friction plates and one or more braking plates, e.g. being in an interleaved arrangement where there is more than one of each), which are compressed against a wall 420W of the housing 420 by an annular piston (moveable actuation element) 490 mounted within a piston chamber 450C.

The upper swivel pin 422, providing the housing of the brake actuator, is received into a cap 486 (e.g. a coil spring seat). Hydraulic seals 452A and 452B are provided between the swivel pin 422 and the cap 486, forming a hydraulically sealed region 454 around the exterior of the swivel pin and within the cap. A hydraulic fluid channel 486H is provided through the cap 486 from the vehicle's hydraulic control system (not shown) into the hydraulically sealed region 454, and an inner hydraulic fluid channel 422H couples from the hydraulically sealed region 154 through the swivel pin 422 and to the piston chamber 450C. A hydraulic fluid supply hose 496 is connected to the cap 486 to supply hydraulic fluid into the piston chamber 450C, providing pressure P to drive piston (moveable actuator element) 490 against the friction plates 444 and braking plate 446, and cause braking of the wheel axle 410.

The steering axle assembly 400 illustrated in Figure 4 is hydraulically operated. Alternatively, the piston (moveable actuator element) may be driven towards the braking plate and friction plates by an electric motor assembly mounted behind the piston, being driven by an electrical signal from the vehicle's electrical control system that is transferred to the swivel pin 422 by a slideable electrode arrangement electrically connecting between the swivel pin and the swivel pin cap. In a further alternative, the movement of the moveable actuator element that bears upon the friction plates and braking plate, in use, may be driven by a mechanical linkage extending through the swivel pin 422, e.g. a hand-operated parking brake handle may be connected to the actuator element by a brake cable extending through the top of the swivel pin.

As was discussed in relation to previously described steering axle assemblies, providing the actuator control (e.g. supplying hydraulic fluid, an electrical control signal, or a mechanical linkage) through the swivel pin further permits a compact suspension assembly, and facilitates a large backlock angle of the corresponding wheel (the maximum angle by which the wheel may be pivoted away from the straight-ahead steering position).

The steering axle assemblies described above may provide vehicles with enhanced manoeuvrability and braking performance, e.g. for use in airport ground support tow trucks and road sweepers.

The figures provided herein are schematic.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A steering axle assembly (100) comprising:
a housing (120) having a wheel bearing (112);
a wheel axle (110) that is rotatably supported in the wheel bearing (112) for rotation about a wheel rotation axis;
a pivot assembly for pivoting the housing (100) about a housing pivot axis that is transverse to the wheel rotation axis, the pivot assembly comprising first and second swivel pins (122, 124) for pivotally mounting within first and second pivot bearings (132, 134);
a brake mechanism having an assembly of members mounted on and around the wheel axle (110) and further having an actuator for causing mutual engagement between the members to brake rotation of the wheel axle (110) about the wheel rotation axis,
wherein the actuator comprises a moveable actuation element (150E) moveably mounted within or through the first swivel pin (122).

2. The steering axle assembly (100) according to claim 1, wherein a control pathway for operating the actuator extends through a wall of the swivel pin.

3. The steering axle assembly (100) according to claim 1 or claim 2, wherein the assembly of members mounted on and around the wheel axle (110) comprises a ball-and-ramp plate assembly (142), and a friction plate (144) and a braking plate (146),
the actuator having a moveable actuation element (150E) with a tapered portion (150T) that is configured to operatively engage with ball-and-ramp plate assembly (142) to compress the arrangement of friction plates (144) and braking plates (146) between the ball-and-ramp plate assembly (142) and a respective wall (120W) of the housing (120).

4. The steering axle assembly (100) according to claim 3, wherein the actuator is a hydraulically operated actuator having a piston chamber (150C) within the first swivel pin (122),
the moveable actuation element (150E) is connected to a piston (150P) slideably received in the piston chamber (150C), and
the control pathway is a hydraulic fluid pathway for the supply of hydraulic fluid to operate the actuator.

5. The steering axle assembly (100) according to claim 4, wherein the exterior of the first swivel pin (122) is provided with a hydraulically sealed region for providing fluid communication between an outer conduit for the supply of hydraulic fluid from a vehicle hydraulic fluid control system and an inner conduit that provides fluid communication through a wall of the first swivel pin (122) and into the piston chamber (150C).

6. The steering axle assembly (100) according to claim 5, wherein the hydraulically sealed region (154) is provided around the exterior of the first swivel pin (122) between first and second annular seals (152A, 152B).

7. The steering axle assembly (100) according to claim 3, wherein the actuator is an electrically operated actuator having an electric motor within the first swivel pin (122),
the moveable actuation element (150E) is connected to a piston (150P) slideably received in the piston chamber (150C), and
the control pathway is an electrical signal pathway for suppling an electrical drive signal to the electric motor to operate the actuator.

8. The steering axle assembly (100) according to claim 7, wherein the moveable actuation element (150E) is connected to a worm screw engaged in a complementary thread provided within the first swivel pin (122), and the electric motor is adapted to drive rotation of the worm screw or complementary thread.

9. The steering axle assembly (100) according to claim 3, wherein the control pathway is a mechanical linkage by which the moveable actuation element (150E) is connected to a mechanical drive mechanism; and optionally
wherein the mechanical drive mechanism is a user-operable handle.

10. The steering axle assembly (100) according to claim 9, wherein the first swivel pin (122) is provided with an axially aligned central conduit through which the mechanical linkage extends.

11. The steering axle assembly (100) according to any preceding claim, wherein an end of the first swivel pin (122) is received within a suspension coil spring seat (186).

12. The steering axle assembly (100) according to any preceding claim, wherein the assembly of members mounted on and around the wheel axle (110) are hydraulically sealed within the housing (120), within cooling liquid.

13. The steering axle assembly (100) according to claim 12, wherein the assembly of members mounted on and around the wheel axle (110) are provided within a brake mechanism chamber, and
an additional reservoir (360) for cooling liquid is provided that is in fluid communication with the brake mechanism chamber.

14. A suspension assembly (180) comprising:
an axle beam (182); and
first and second steering axle assemblies (100, 100') according to any preceding claim,
wherein the axle beam (182) comprises first and second pivot bearings (132, 134) pivotably supporting each of the steering axle assemblies (100, 100').

15. A vehicle comprising a vehicle body mounted to the suspension assembly (180) of claim 14.

## Patentansprüche

1. Lenkachsenbaugruppe (100), umfassend:
ein Gehäuse (120), das ein Radlager (112) aufweist;
eine Radachse (110), die drehbar in dem Radlager (112) zur Drehung um eine Raddrehachse gestützt ist;
eine Schwenkbaugruppe zum Schwenken des Gehäuses (100) um eine Gehäuseschwenkachse, die quer zu der Raddrehachse ist, wobei die Schwenkbaugruppe einen ersten und einen zweiten Drehzapfen (122, 124) zur schwenkbaren Montage innerhalb eines ersten und eines zweiten Schwenklagers (132, 134) umfasst;
einen Bremsmechanismus, der eine Baugruppe von Elementen aufweist, die an und um die Radachse (110) montiert ist, und ferner ein Stellglied zum Bewirken von gegenseitigem Eingriff zwischen den Elementen aufweist, um Drehung der Radachse (110) um die Raddrehachse zu bremsen,
wobei das Stellglied ein bewegbares Betätigungselement (150E) umfasst, das bewegbar innerhalb des oder durch den ersten Drehzapfen (122) montiert ist.

2. Lenkachsenbaugruppe (100) nach Anspruch 1, wobei sich ein Steuerweg zum Betätigen des Stellglieds durch eine Wand des Drehzapfens erstreckt.

3. Lenkachsenbaugruppe (100) nach Anspruch 1 oder Anspruch 2, wobei die Baugruppe von Elementen, die an und um die Radachse (110) montiert ist, eine Kugel- und Rampenplattenbaugruppe (142) und eine Reibungsplatte (144) und eine Bremsplatte (146) umfasst,
wobei das Stellglied ein bewegbares Betätigungselement (150E) mit einem sich verjüngenden Abschnitt (150T) aufweist, der konfiguriert sind, um mit der Kugel- und Rampenplattenbaugruppe (142) in Wirkeingriff zu kommen, um die Anordnung aus Reibungsplatten (144) und Bremsplatten (146) zwischen der Kugel- und Rampenplattenbaugruppe (142) und einer jeweiligen Wand (120W) des Gehäuses (120) zusammenzudrücken.

4. Lenkachsenbaugruppe (100) nach Anspruch 3, wobei das Stellglied ein hydraulisch betätigtes Stellglied ist, das eine Kolbenkammer (150C) innerhalb des ersten Drehzapfens (122) aufweist,
das bewegbare Betätigungselement (150E) mit einem Kolben (150P) verbunden ist, der verschiebbar in der Kolbenkammer (150C) aufgenommen ist, und
der Steuerweg ein Hydraulikfluidweg für die Zufuhr von Hydraulikfluid zum Betätigen des Stellglieds ist.

5. Lenkachsenbaugruppe (100) nach Anspruch 4, wobei das Äußere des ersten Drehzapfens (122) mit einem hydraulisch abgedichteten Bereich zum Bereitstellen von Fluidkommunikation zwischen einer äußeren Leitung für die Zufuhr von Hydraulikfluid von einem Fahrzeughydraulikfluidsteuersystem und einer inneren Leitung, die Fluidkommunikation durch eine Wand des ersten Drehzapfens (122) und in die Kolbenkammer (150C) bereitstellt, bereitgestellt ist.

6. Lenkachsenbaugruppe (100) nach Anspruch 5, wobei der hydraulisch abgedichtete Bereich (154) um das Äußere des ersten Drehzapfens (122) zwischen einer ersten und einer zweiten ringförmigen Dichtung (152A, 152B) bereitgestellt ist.

7. Lenkachsenbaugruppe (100) nach Anspruch 3, wobei das Stellglied ein elektrisch betätigtes Stellglied ist, das einen Elektromotor innerhalb des ersten Drehzapfens (122) aufweist,
das bewegbare Betätigungselement (150E) mit einem Kolben (150P) verbunden ist, der verschiebbar in der Kolbenkammer (150C) aufgenommen ist, und
der Steuerweg ein elektrischer Signalweg ist, um dem Elektromotor ein elektrisches Antriebssignal zuzuführen, um das Stellglied zu betätigen.

8. Lenkachsenbaugruppe (100) nach Anspruch 7, wobei das bewegbare Betätigungselement (150E) mit einer Schneckenschraube verbunden ist, die in ein komplementäres Gewinde eingreift, das innerhalb des ersten Drehzapfens (122) bereitgestellt ist, und der Elektromotor ausgelegt ist, um Drehung der Schneckenschraube oder des komplementären Gewindes anzutreiben.

9. Lenkachsenbaugruppe (100) nach Anspruch 3, wobei der Steuerweg eine mechanische Kopplung ist, durch die das bewegbare Betätigungselement (150E) mit einem mechanischen Antriebsmechanismus verbunden ist; und
wobei optional der mechanische Antriebsmechanismus ein von einem Benutzer bedienbarer Griff ist.

10. Lenkachsenbaugruppe (100) nach Anspruch 9, wobei der erste Drehzapfen (122) mit einer axial ausgerichteten zentralen Leitung bereitgestellt ist, durch die sich die mechanische Kopplung erstreckt.

11. Lenkachsenbaugruppe (100) nach einem vorhergehenden Anspruch, wobei ein Ende des ersten Drehzapfens (122) innerhalb eines Aufhängungsspulenfedersitzes (186) aufgenommen ist.

12. Lenkachsenbaugruppe (100) nach einem vorhergehenden Anspruch, wobei die Baugruppe von Elementen, die an und um die Radachse (110) montiert ist, innerhalb des Gehäuses (120) innerhalb von Kühlflüssigkeit hydraulisch abgedichtet ist.

13. Lenkachsenbaugruppe (100) nach Anspruch 12, wobei die Baugruppe von Elementen, die an und um die Radachse (110) montiert ist, innerhalb einer Bremsmechanismuskammer bereitgestellt ist, und
ein zusätzliches Reservoir (360) für Kühlflüssigkeit bereitgestellt ist, das in Fluidkommunikation mit der Bremsmechanismuskammer ist.

14. Aufhängungsbaugruppe (180), umfassend:
einen Achsenträger (182); und
eine erste und eine zweite Lenkachsenbaugruppe (100, 100') nach einem vorhergehenden Anspruch,
wobei der Achsenträger (182) ein erstes und ein zweites Schwenklager (132, 134) umfasst, die jede der Lenkachsenbaugruppen (100, 100') schwenkbar stützen.

15. Fahrzeug, umfassend eine Fahrzeugkarosserie, die an der Aufhängungsbaugruppe (180) nach Anspruch 14 montiert ist.

## Revendications

1. Ensemble essieu de direction (100) comprenant :
un boîtier (120) ayant un roulement de roue (112) ;
une fusée de roue (110) qui est supportée de manière rotative dans le roulement de roue (112) pour permettre la rotation autour d'un axe de rotation de roue ;
un ensemble pivot pour faire pivoter le boîtier (100) autour d'un axe de pivotement de boîtier qui est transversal à l'axe de rotation de la roue, l'ensemble pivot comprenant des premier et second axes de pivot (122, 124) pour un montage pivotant à l'intérieur des premier et second roulements de pivot (132, 134) ;
un mécanisme de frein ayant un ensemble d'éléments montés sur ou autour de la fusée de roue (110) et ayant en outre un actionneur pour provoquer un engagement mutuel entre les éléments afin de freiner la rotation de la fusée de roue (110) autour de l'axe de rotation de la roue,
dans lequel l'actionneur comprend un élément d'actionnement mobile (150E) monté de manière mobile dans ou à travers le premier axe de pivot (122).

2. Ensemble essieu de direction (100) selon la revendication 1, dans lequel une voie de commande pour faire fonctionner l'actionneur s'étend à travers une paroi de l'axe de pivot.

3. Ensemble essieu de direction (100) selon la revendication 1 ou 2, dans lequel l'ensemble d'éléments montés sur et autour de la fusée de roue (110) comprend un ensemble plaque à billes et rampe (142), et un disque de friction (144) et un disque de freinage (146),
l'actionneur ayant un élément d'actionnement mobile (150E) avec une partie conique (150T) qui est configurée pour s'engager de manière opérationnelle avec l'ensemble plaque à billes et rampe (142) afin de comprimer l'agencement des disques de friction (144) et disques de freinage (146) entre l'ensemble plaque à billes et rampe (142) et une paroi respective (120W) du boîtier (120).

4. Ensemble essieu de direction (100) selon la revendication 3, dans lequel l'actionneur est un actionneur à commande hydraulique ayant une chambre de piston (150C) à l'intérieur du premier axe de pivot (122),
l'élément d'actionnement mobile (150E) est relié à un piston (150P) reçu de manière coulissante dans la chambre de piston (150C), et
la voie de commande est une voie de fluide hydraulique pour l'alimentation en fluide hydraulique pour faire fonctionner l'actionneur.

5. Ensemble essieu de direction (100) selon la revendication 4, dans lequel l'extérieur du premier axe de pivot (122) est doté d'une région hydrauliquement étanche pour fournir une communication fluidique entre un conduit externe pour l'alimentation en fluide hydraulique à partir d'un système de commande de fluide hydraulique de véhicule et un conduit interne qui assure la communication fluidique à travers une paroi du premier axe de pivot (122) et dans la chambre de piston (150C).

6. Ensemble essieu de direction (100) selon la revendication 5, dans lequel la région hydrauliquement étanche (154) est disposée autour de l'extérieur du premier axe de pivot (122) entre les premier et second joints annulaires (152A, 152B).

7. Ensemble essieu de direction (100) selon la revendication 3, dans lequel l'actionneur est un actionneur à commande électrique ayant un moteur électrique à l'intérieur du premier axe de pivot (122),
l'élément d'actionnement mobile (150E) est relié à un piston (150P) reçu de manière coulissante dans la chambre de piston (150C), et
la voie de commande est une voie de signal électrique pour fournir un signal de commande électrique au moteur électrique pour faire fonctionner l'actionneur.

8. Ensemble essieu de direction (100) selon la revendication 7, dans lequel l'élément d'actionnement mobile (150E) est relié à une vis sans fin engagée dans un filetage complémentaire prévu à l'intérieur du premier axe de pivot (122), et le moteur électrique est adapté pour entraîner la rotation de la vis sans fin ou du filetage complémentaire.

9. Ensemble essieu de direction (100) selon la revendication 3, dans lequel la voie de commande est une timonerie mécanique par laquelle l'élément d'actionnement mobile (150E) est relié à un mécanisme d'entraînement mécanique ; et éventuellement
dans lequel le mécanisme d'entraînement mécanique est une poignée actionnable par l'utilisateur.

10. Ensemble essieu de direction (100) selon la revendication 9, dans lequel le premier axe de pivot (122) est doté d'un conduit central aligné axialement à travers lequel s'étend la timonerie mécanique.

11. Ensemble essieu de direction (100) selon l'une quelconque des revendications précédentes, dans lequel une extrémité du premier axe de pivot (122) est reçue dans un siège de ressort hélicoïdal de suspension (186).

12. Ensemble essieu de direction (100) selon l'une quelconque des revendications précédentes, dans lequel l'ensemble des éléments montés sur et autour de la fusée de roue (110) sont hydrauliquement étanches à l'intérieur du boîtier (120), dans un liquide de refroidissement.

13. Ensemble essieu de direction (100) selon la revendication 12, dans lequel l'ensemble des éléments montés sur et autour de la fusée de roue (110) sont disposés à l'intérieur d'une chambre de mécanisme de frein, et
un réservoir additionnel (360) pour un liquide de refroidissement est prévu et est en communication fluidique avec la chambre du mécanisme de frein.

14. Ensemble suspension (180) comprenant :
une poutre d'essieu (182) ; et
des premier et second ensembles essieu de direction (100, 100') selon l'une quelconque des revendications précédentes,
dans lequel la poutre d'essieu (182) comprend des premier et second roulements de pivot (132, 134) supportant de manière pivotante chacun des ensembles essieu de direction (100, 100').

15. Véhicule comprenant une carrosserie de véhicule montée sur l'ensemble suspension (180) de la revendication 14.
